# EUROPEAN PATENT APPLICATION

(11) **EP 2 423 788 A1**
(43) Date of publication of application: **29.02.2012**
(21) Application number: 11167697.9
(22) Date of filing: 26.05.2011
(51) Int. Cl.: G06F 3/023, G06F 3/01, G06F 3/048

(54) **Letter input method and mobile device adapted thereto**

(30) Priority: 23.08.2010 KR 20100081452
(71) Applicant: Samsung Electronics Co., Ltd., Gyeonggi-do 506-762 (KR)
(72) Inventor: Cho, Seong Hun, Gyeonggi-do (KR)
(74) Representative: Jenkins, Richard Gavin

(57) **Abstract**

A letter input method and a mobile device allow users to input letters via a virtual keypad on a touch screen. A letter input field and a virtual keypad with a number of keys are displayed. A touched key and a movement direction of a touch location movement gesture are detected. A letter to be input is chosen according to the touched key and the movement direction. And the chosen letter is displayed on the letter input field. The letter input method can allow users to rapidly and easily type letters to the touch screen of a mobile device.

## Description

### TECHNICAL FIELD OF THE INVENTION

This invention relates to a method that can input letters via a virtual keypad on a touch screen of a mobile device. The invention is also related to a mobile device adapted to the letter input method.

### BACKGROUND OF THE INVENTION

Mobile devices have been widely used because they can be easily carried and provide a variety of functions as well as a voice call function. Mobile devices are now serving as multimedia communication systems as they can provide a data transmission service and other various additional services. Most of the recently released mobile devices are equipped with a touch screen. This provides convenient use to users.

Touch screen based mobile devices allow users to input letters via a virtual keypad on the touch screen. Conventional letter input systems using a virtual keypad on the touch screen are performed using the same method as a button-type keypad. This cannot sufficiently utilize the advantage that the touch screen has when letters are input via the touch screen. Although user interface (UI) has been researched to increase the letter input speed in conventional touch screen based mobile devices, it has been performed based on the letter input method using a button-type keypad. Therefore, conventional letter input systems have a limitation to enhance the letter input speed in mobile devices.

### SUMMARY OF THE INVENTION

To address the above-discussed deficiencies of the prior art, it is a primary object to provide a mobile device adapted to address the above-described problems and, particularly, to provides a letter input method that can utilize the features of a touch screen and increase letter input speed thereon.

The invention further provides a mobile device adapted to the letter input method.

In accordance with an embodiment of the invention, the invention provides a letter input method of a mobile device. A letter input field and a virtual keypad with a number of keys are displayed. A touched key and a movement direction of a touch location movement gesture are detected. A letter to be input is chosen according to the touched key and the movement direction. And the chosen letter is displayed on the letter input field.

In accordance with another embodiment of the invention, the invention provides a mobile device that includes a touch sensing unit, a display unit, and a controller. The touch sensing unit senses a user's touch and a user's touch location movement gesture. The display unit displays a letter input field and a virtual keypad with a number of keys. The controller controls the touch sensing unit, senses a user's touch applied to one of the number of keys and touch location movement, detects the touched key and a movement direction of the touch location movement gesture, chooses a letter to be input according to the touched key and the movement direction, and controls the display unit to display the chosen letter on the letter input field.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts. The features and advantages of the invention will become more apparent from the following detailed description in conjunction with the accompanying drawings, in which:

FIGURE 1 illustrates a schematic block diagram of a mobile device according to an embodiment of the invention;

FIGURE 2 illustrates a process for inputting letters in a mobile device, according to an embodiment of the invention;

FIGURE 3 illustrates an example of screens displayed on a mobile device according to an embodiment of the invention;

FIGURE 4 illustrates another example of screens displayed on a mobile device according to an embodiment of the invention;

FIGURE 5 illustrates a process for inputting letters in a mobile device, according to another embodiment of the invention;

FIGURES 6A and 6B illustrate screens displayed on a mobile device according to an embodiment of the invention;

FIGURE 7 illustrates a process for inputting letters in a mobile device, according to another embodiment of the invention;

FIGURE 8 illustrates an example of screens displayed on a mobile device according to an embodiment of the invention; and

FIGURE 9 illustrates another example of screens displayed on a mobile device according to an embodiment of the invention.

### DETAILED DESCRIPTION OF THE INVENTION

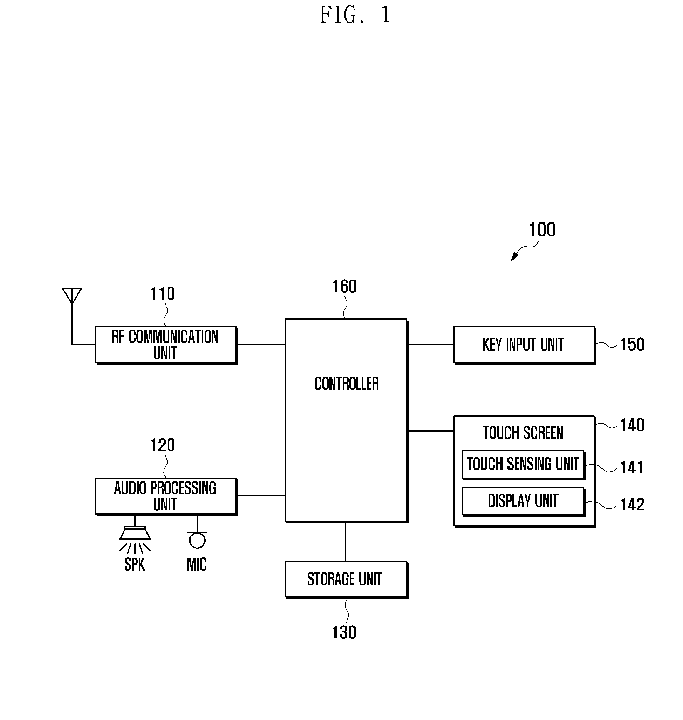

FIGURES 1 through 9, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged touch screen enabled device. Detailed descriptions of well-known functions and structures incorporated herein may be omitted to avoid obscuring the subject matter of the invention.

In the following description, although the embodiments of the invention are explained based on a mobile device equipped with a touch screen, it should be understood that the invention is not limited to the embodiments. It will be appreciated that the invention may be applied to all information communication devices, multimedia devices, and their applications, when they are equipped with a touch screen, for example, a mobile communication terminal, a Portable Multimedia Player (PMP), a Personal Digital Assistant (PDA), a smart phone, an MP3 player, and such.

FIGURE 1 illustrates a schematic block diagram of a mobile device according to an embodiment of the invention. A mobile device 100 includes an RF communication unit 110, an audio processing unit 120, a storage unit 130, a touch screen 140, a key input unit 150, and a controller 160.

The RF communication unit 110 transmits and receives data to and from other mobile devices via wireless communication. The RF communication unit 110 includes an RF transmitter, for up-converting the frequency of signals to be transmitted and amplifying the signals, and an RF receiver, for low-noise amplifying received RF signals and down-converting the frequency of the received RF signals. The RF communication unit 110 receives data via a wireless channel and provides the received data to the controller 160. The RF communication unit 110 also transmits data from the controller 160 via a wireless channel.

The audio processing unit 120 includes coders and decoders (CODECs). The CODECs are comprised of a data CODEC for processing packet data, and such, and an audio CODEC for processing audio signals, such as voice signals, and such. The audio CODEC converts digital audio signals into analog audio signals and outputs them via a speaker (SPK). The audio CODEC also converts analog audio signals received by a microphone (MIC) into digital audio signals.

The storage unit 130 stores programs for operating the mobile device and data generated when the programs are executed. The storage unit 130 is comprised of a program storage area and a data storage area. The program storage area stores a program for controlling the entire operation of the mobile device 100 and an operating system (OS) for booting the mobile device 100. The program storage area also stores programs for playing back multimedia contents and for setting other optional functions of the mobile device 100, such as a camera function, an audio playback function, a photograph or moving image playback function, and such. The data storage area refers to an area where data, generated when the mobile device 100 is used, is stored. That is, the data storage area stores a variety of contents, such as photographs, moving images, phone book, audio data, and such. In an embodiment of the invention, the storage unit 130 stores information regarding letters mapped to keys input according to the movement direction of touch gestures, respectively, in a table.

The touch screen 140 includes a touch sensing unit 141 and a display unit 142. The touch sensing unit 141 senses a user's touches. The touch sensing unit 141 may be implemented with various types of touch sensors, such as a capacitive overlay type sensor, a resistive overlay type sensor, an infrared beam type sensor, a pressure sensor, and such. It should be understood that the invention is not limited to the sensors listed above. The touch sensing unit 141 may be implemented with all types of sensors when they can sense touch or contact. The touch sensing unit 141 senses a user's touch, creates a touch signal, and outputs the touch signal to the controller 160. The touch signal includes coordinate data of a user's input touch. When the user inputs his/her touch location movement gesture, the touch sensing unit 141 creates a sensed signal that contains the coordinate data regarding the path of a touch movement gesture and outputs the sensed signal to the controller 160. The touch location movement gesture may include a flick and a drag. A flick refers to a gesture in which the speed of the touch location movement gesture exceeds a preset value. A drag refers to a gesture in which the speed of the touch location movement gesture is less than the preset value.

The display unit 142 may be implemented with a Liquid Crystal Display (LCD), an Organic Light Emitting Diode (OLED), an Active Matrix Organic Light Emitting Diodes (AMOLED), and such. The display unit 142 displays menus, input data, function-setting information, and additional information for the mobile device 100. For example, the display unit 142 may display a booting screen, an idle screen, a menu screen, a call screen, and application interface screens of the mobile device 100. In an embodiment of the invention, the display unit 142 also displays a letter input field and a virtual keypad. The display unit 142 may display letters on the letter input field as keys corresponding to the letters are input on the virtual keypad.

The key input unit 150 allows a user to operate keys to control the mobile device 100, creates input signals, and outputs the input signals to the controller 160. The key input unit 150 may be implemented with a keypad containing alphanumeric keys and direction keys. The key input unit 150 may also be implemented with function keys installed to one side of the mobile device 100. When the mobile device 100 is configured in such a way that only the touch screen 140 serves as an input mechanism, the key input unit 150 may be omitted in the mobile device 100.

The controller 160 controls the entire operation of the mobile device 100. The controller 160 controls the display unit 142 to display a virtual keypad with a number of keys and a letter input field. The controller 160 determines whether the user touches one of a number of keys via the touch sensing unit 141. When the controller 160 ascertains that one of a number of keys is touched, it further determines whether the user performs his/her touch location movement gesture. When the controller 160 ascertains that the user performs his/her touch location movement gesture, the controller 160 detects the touched key and the movement direction of the touch location movement gesture. The controller 160 chooses a letter to be input, according to the touched key and the movement direction of the touch location movement gesture, and controls the display unit 142 to display the chosen letter on the letter input field. The controller 160 determines whether the touch location movement gesture moves from the area of the touched key to an area of another key. When the controller 160 ascertains that the touch location movement gesture moves from the area of the touched key to an area of another key, the controller 160 may choose a letter to be input, according to the touched key and the movement direction of the touch location movement gesture.

When the controller 160 ascertains that the user touches the touch screen 140 and then moves the touch location, the controller 160 may detect the touched key, the movement direction, and movement distance of the touch movement gesture. In that situation, the controller 160 may choose a letter to be input, based on the touched key, the movement direction, and the movement distance of the touch movement gesture, and may then control the display unit 142 to display the chosen letter on the letter input field.

While the controller 160 is controlling the display unit 142 to display letters on the letter input field, it may change and display the form of letters displayed on the virtual keypad according to the movement direction of the touch location movement gesture. For example, when the virtual keypad displays lower-case English letters, the controller 160 may control the display unit 142 to change lower-case English letters into capital English letters according to the movement direction of the touch location movement gesture. Likewise, when the virtual keypad displays capital English letters, the controller 160 may control the display unit 142 to change capital English letters into lower-case English letters according to the movement direction of the touch location movement gesture.

The controller 160 may choose a letter to be input by combining a number of keys input by the user. For example, when the user touches one of a number of keys on the virtual keypad and then releases the touch from the key, and then touches another key and then moves the touch location, the controller 160 may choose a letter to be input by combining the key from which the touch is released, the key to which another touch is applied and from which the touch location movement gesture is performed, and the movement direction and movement distance of the touch movement gesture.

In the foregoing description, the configuration of the mobile device 100 adapted to the letter input method has been described. The following description provides embodiments of the letter input method of the mobile device 100 in detail referring to the accompanying drawings.

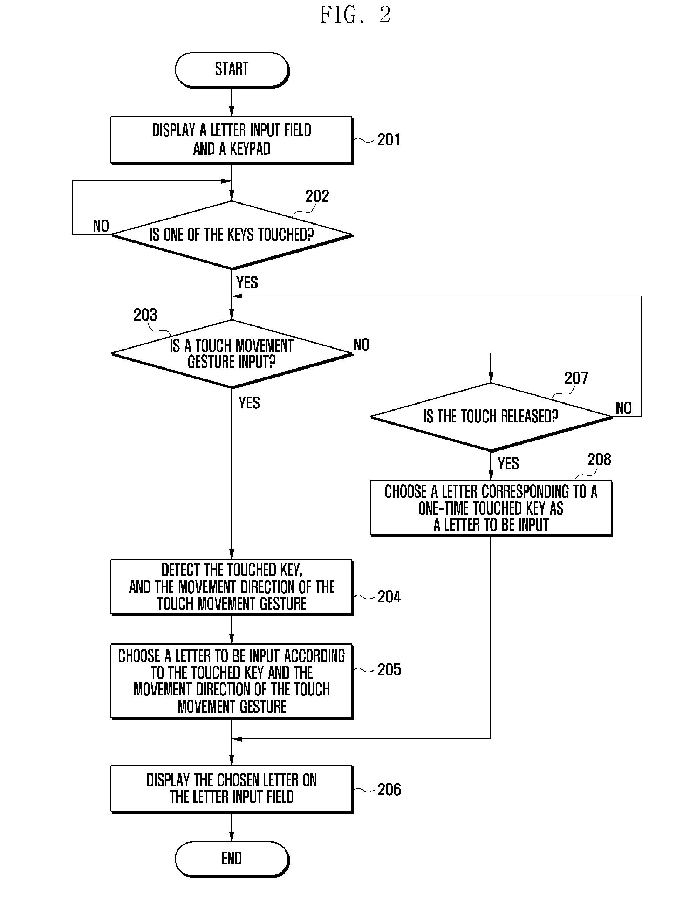

FIGURE 2 illustrates a process for inputting letters in a mobile device 100, according to an embodiment of the invention.

In block 201, the controller 160 controls the display unit 142 to display a virtual keypad with a number of keys and a letter input field. In an embodiment, the virtual keypad may be an English-letter virtual keypad or a Korean-letter ('Hangeul') virtual keypad. The virtual keypad according to an embodiment may be implemented in such a manner that the keys are arranged in a 3x4 key layout and an edge region surrounds the keys. The edge region serves as an area to which the user applies his/her touch location movement gesture and is located at the portion adjacent to the outmost keys in the virtual keypad. In the following description, an embodiment of the invention is described based on the virtual keypad in a 3x4 key layout. It should be understood, however, that the invention is not limited to the described embodiment. For example, the invention may also be implemented with a virtual keypad in a QWERTY key layout or another key layout.

In block 202, the controller 160 controls the touch sensing unit 141 and determines whether the user touches one of a number of keys in the virtual keypad. When the user touches one of a number of keys in order to input a corresponding letter at block 202, the touch sensing unit 141 senses the user' touch, creates a touch sensed signal, and transfers it to the controller 160. The touch sensed signal includes information regarding a coordinate input by the user.

That is, when controller 160 ascertains that the user touches one of a number of keys in the virtual keypad at block 202, it determines whether the user moves the touch in block 203. In an embodiment, the touch location movement gesture refers to a gesture to input a letter.

When the controller 160 ascertains that the user does not move the touch at block 203, it determines whether the touch is released in block 207.

When the controller 160 ascertains that the touch has been released at block 207, it can choose a letter to be input via a letter on the key that was touched once (block 208). For example, when a user touches a 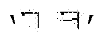 key in the Korean-letter virtual keypad and then releases his/her touch therefrom, the controller 160 chooses the 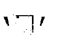 letter of the 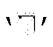 and 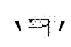 letters on the key, corresponding to the one-time touch, as a letter to be input.

After determining the letter to be input at block 208, the controller 160 controls the display unit 142 to display the chosen letter on the letter input field (block 206).

Meanwhile, when the controller 160 ascertains that the user moves the touch at block 203, it detects the touched key and the movement direction of the touch location movement gesture via the sensed signal of the touch sensing unit 141 (block 204). That is, when the user touches one of the keys in the virtual keypad and then moves his/her touch without losing contact, the touch sensing unit 141 creates a touch sensed signal, including coordinate information regarding the path of the user's touch location movement gesture, and transfers it to the controller 160. In that situation, the controller 160 may detect the touched key and the movement direction of the user' s touch location movement gesture via the coordinate information. For example, when a user touches a 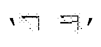 key in the Korean-letter virtual keypad and then moves his/her touch in the left direction, the controller 160 detects that the 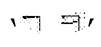 key is touched and the user's touch location movement gesture is toward the left.

After detecting the touched key and the movement direction of the touch location movement gesture at block 204, the controller 160 chooses a letter to be input based on the information (block 205) . In an embodiment, the storage unit 130 stores information regarding letters to be input for each key in the virtual keypad by matching movement directions of the touch location movement gestures.

Alternatively, the virtual keypad may be implemented with a 3x4 English-letter virtual keypad where each key is allocated with three English letters according to an embodiment of the invention. When the controller 160 detects that a user touches a key and then releases the touch, it can select, as a letter to be input, an English letter located in the middle among the three English letters allocated to the touched key. In addition, when the controller 160 detects that a user touches a key and then moves the touch in the left direction, it can select, as a letter to be input, an English letter located at the left among the three English letters allocated to the touched key. Likewise, when the controller 160 detects that a user touches a key and then moves the touch in the right direction, it can select, as a letter to be input, an English letter located at the right among the three English letters allocated to the touched key. For example, when a user touches an 'abc' key and then releases the touch, the controller 160 selects, as a letter to be input, the 'b' letter located in the middle among the letters 'abc' allocated to the touched 'abc' key. In addition, when a user touches an 'abc' key and then moves the touch in the left direction, the controller 160 selects, as a letter to be input, the 'a' letter located at the left side among the letters 'abc' allocated to the touched 'abc' key. Likewise, when a user touches an 'abc' key and then moves the touch in the right direction, the controller 160 selects, as a letter to be input, the 'c' letter located at the right side among the letters 'abc' allocated to the touched 'abc' key.

In an embodiment, when the virtual keypad is implemented with a Korean-letter virtual keypad, the controller 160 may choose, as a consonant to be input, one of the two or more consonants allocated to a key according to the touched key and the number of key touches. In addition, the controller 160 may also choose a vowel to be input according to the movement direction of the touch location movement gesture. After that, the controller 160 may choose a syllable by combining the consonant(s) and the vowel. For example, when a user touches a 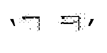 key two times and then performs the touch location movement gesture in the right direction, the controller 160 chooses, as a consonant to be input, the 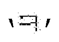 letter of the two 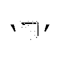 and 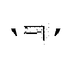 consonants allocated to the key, corresponding to two touches, and also chooses the vowel 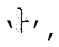 as a vowel to be input, corresponding to the right direction of the touch location movement gesture, thereby determining the syllable 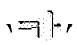 by combining the consonant 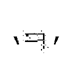 and the vowel 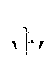 . In this application, when the Korean-letter virtual keypad is described, the term 'syllable' is also introduced.

When a user touches a Korean vowel key and then performs a touch location movement gesture, the controller 160 may automatically choose the Korean consonant, '○' and also a corresponding vowel according to the direction of the touch location movement gesture. For example, when a user touches the vowel 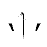 key and then performs a touch location movement gesture in the right direction, the controller 160 may automatically choose the Korean consonant '○' and also the vowel 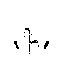 corresponding to the right direction of the touch location movement gesture, thereby determining the syllable 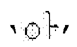 by combining the consonant '○' and the vowel 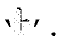

In order to choose a Korean vowel, the controller 160 may also determine whether a specific key is touched, as well as using information regarding the direction of a touch location movement gesture. In an embodiment, the specific key may be a function key to change a vowel to a compound vowel. Examples of the specific key are the '○' key, the '*' key, a '#' key, and such. For example, when a user touches a 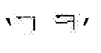 key in the Korean-letter virtual keypad once, then moves his/her touch in the right direction, and then touches the '○' key, the controller 160 chooses, as a consonant to be input, the 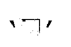 letter of the two 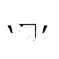 and 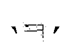 consonants allocated to the key, corresponding to one touch, and also chooses the vowel 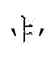 as the compound vowel of the vowel 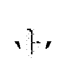 corresponding to the right direction of the touch location movement gesture, thereby determining the syllable 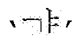 by combining the consonant 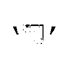 and the vowel 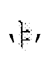 .

As described above, after determining the letter (when typing in English letters) or the syllable (when typing in Korean-letters) at block 205, the controller 160 controls the display unit 142 to display the chosen letter or chosen syllable on the input letter input field at block 206.

In an another embodiment, while detecting the touched key and the direction of the touch location movement gesture at block 204, the controller 160 may determine whether the touch location movement gesture moves out of the area defined by the touched key. This is to determine whether the touch location movement gesture serves to input a letter. In particular, the controller 160 controls the touch sensing unit 141 and determines whether the touch location movement gesture moves from the area of the touched key to an area of another key. The keys have a certain area respectively in the virtual keypad, and they are separated by a boundary region. The controller 160 determines whether the user drags his/her touch across the boundary region between the keys, such that it can detect that the touch location movement gesture moves out of an area of the touched key. When the controller 160 ascertains that the touch location movement gesture moves across the boundary region between the keys, it chooses a letter to be input at block 205.

In an another embodiment, while detecting the touched key and the movement direction of the touch location movement gesture at block 204, the controller 160 may determine whether the movement distance of the touch location movement gesture exceeds a preset value. When the controller 160 ascertains that the movement distance of the touch location movement gesture exceeds a preset value, it can choose a letter or syllable to be input according to the touched key and the movement direction of the touch location movement gesture at block 205.

In order to choose a letter or a syllable to be input, the controller 160 can combine a number of input keys. For example, when a user touches one of the keys in the virtual keypad, then releases the touch, then touches another key and then performs a touch location movement gesture, the controller 160 may choose a letter to be input by combining the key from which the touch is released, the key to which another touch is applied and from which the touch location movement gesture is performed, and the movement direction and movement distance of the touch movement gesture.

When the virtual keypad is implemented with a Korean-letter virtual keypad, the controller 160 may make a determination, when a consonant key is touched, as to whether only a touch occurs. In contrast, when a vowel key is touched, the controller 160 may determine whether a touch occurs and can also concurrently detect a touch location movement gesture. In order to input a syllable formed by combining a consonant (s) with a vowel, the user touches a consonant key to select a consonant, and then touches a vowel key again and then performs a touch location movement gesture to select a vowel. For example, when a user touches a 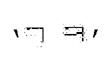 key, then releases the touch, then touches then 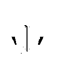 key, and then performs a touch location movement gesture in the right direction, the controller 160 chooses, as a consonant to be input, the 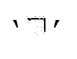 letter of the two 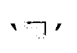 and 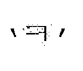 consonants allocated to the key, corresponding to the first touch, and also chooses, as a vowel to be input, the vowel 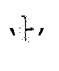 corresponding to the right direction of the touch location movement gesture from the 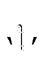 key, thereby determining the syllable 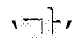 by combining the consonant 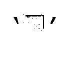 and the vowel 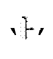

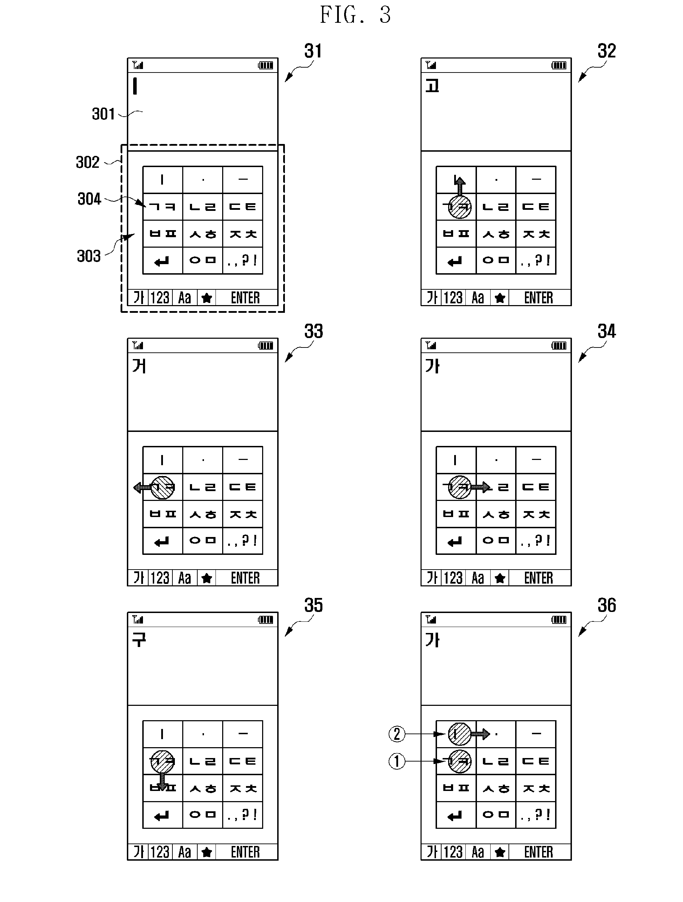

FIGURE 3 illustrates an example of screens displayed on the mobile device 100 according to an embodiment of the invention. The embodiment is described based on a Korean-letter virtual keypad.

Diagram 31 of FIGURE 3 shows a screen first displayed when a letter input interface is executed. The screen displays a letter input field 301 and a virtual keypad 302. The virtual keypad 302 includes an edge region 303 and a number of keys 304. The edge region 303 serves to receive a user' s touch location movement gesture. Where the left boundary of the 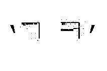 key comes in contact with the boundary line on the left of the display unit 142, the user can touch the 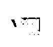 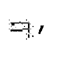 key but may not be able to conduct his/her input touch location movement gesture. As such, the edge region 303 is used as an area to receive a touch location movement gesture conducted by the user.

Diagram 32 of FIGURE 3 shows a screen when the user touches the 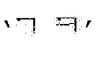 key and then performs the touch location movement gesture in the upwards direction. The letter input field 301 displays the syllable 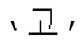 .This can be shown according to the following operations: the consonant 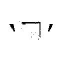 is chosen as the user touches the 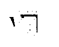 key once; the vowel 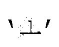 is chosen as the user performs the touch location movement gesture in the upwards direction; and the consonant 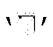 is combined with the vowel 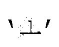 . In another embodiment, when the user touches the '○' key while the syllable 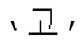 is being displayed on the letter input field 301, the vowel 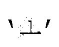 is changed to the compound vowel 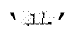 , thereby displaying 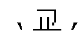 on the letter input field 301.

Diagrams 33 to 35 of FIGURE 3 show screens when the user touches the 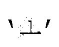 key and then performs the touch location movement gestures in the left, right, and downwards direction, respectively. In that situation, the syllables 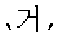 , 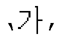 , and 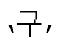 are displayed on the letter input field 301 as shown in diagrams 33 to 35, respectively.

Diagram 36 of FIGURE 3 shows a screen when the controller 160 can make a determination, when a consonant key is touched, as to whether only a touch occurs; and can make a determination, when a vowel key is touched, as to whether a touch occurs and can also detect a touch location movement gesture concurrently. In order to input the syllable 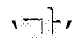 , the user can touch the 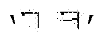 key and then release the touch to select the consonant 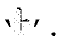 , and can touch the 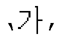 key and then perform the touch location movement gesture in the right direction to select 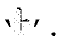 .

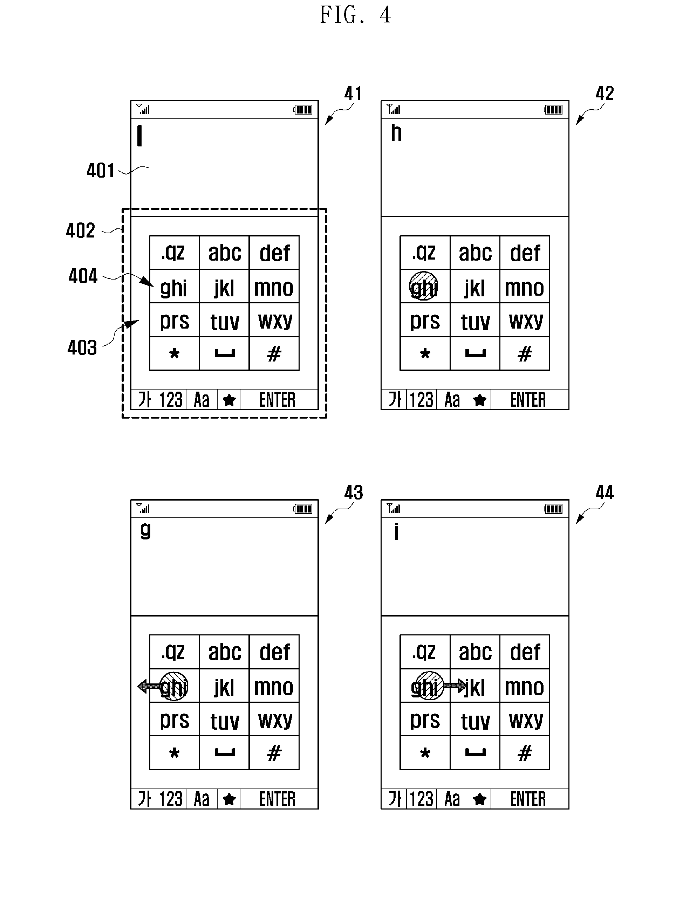

FIGURE 4 illustrates another example of screens displayed on the mobile device 100 according to an embodiment of the invention. The embodiment is described based on an English-letter virtual keypad.

Diagram 41 of FIGURE 4 shows a screen that is displayed when a letter input interface is executed. The screen displays a letter input field 401 and a virtual keypad 402. The virtual keypad 402 includes an edge region 403 and a number of keys 404. In this embodiment, each key in the English-letter virtual keypad is allocated with three English letters. When a user touches one of the keys and releases the touch, the controller 160 selects, as a letter to be input, an English letter located in the middle of the three English letters allocated to the touched key. In addition, when the controller 160 detects that a user touches a key and then moves the touch in the left direction, it can select, as a letter to be input, an English letter located at the left side of the three English letters allocated to the touched key. Likewise, when the controller 160 detects that a user touches a key and then moves the touch in the right direction, it can select, as a letter to be input, an English letter located at the right among the three English letters allocated to the touched key.

Diagram 42 of FIGURE 4 shows a screen when a user touches a 'ghi' key and then releases the touch. In that situation, the 'h' letter located in the middle among the letters 'ghi' allocated to the touched 'ghi' key is displayed on the letter input field 401. Diagrams 43 and 44 of FIGURE 4 show screens when a user touches a 'ghi' key and then moves the touch in the left and right directions, respectively. That is, the 'g' letter located at the left among the letters 'ghi' allocated to the touched 'ghi' key is displayed on the letter input field 401 as shown in diagram 43. Likewise, the 'i' letter located at the right among the letters 'ghi' allocated to the touched 'ghi' key is displayed on the letter input field 401 as shown in diagram 44.

Therefore, the letter input method according to an embodiment of the invention can allow users to input letters to the mobile device by controlling the movement directions of the touch location movement gesture.

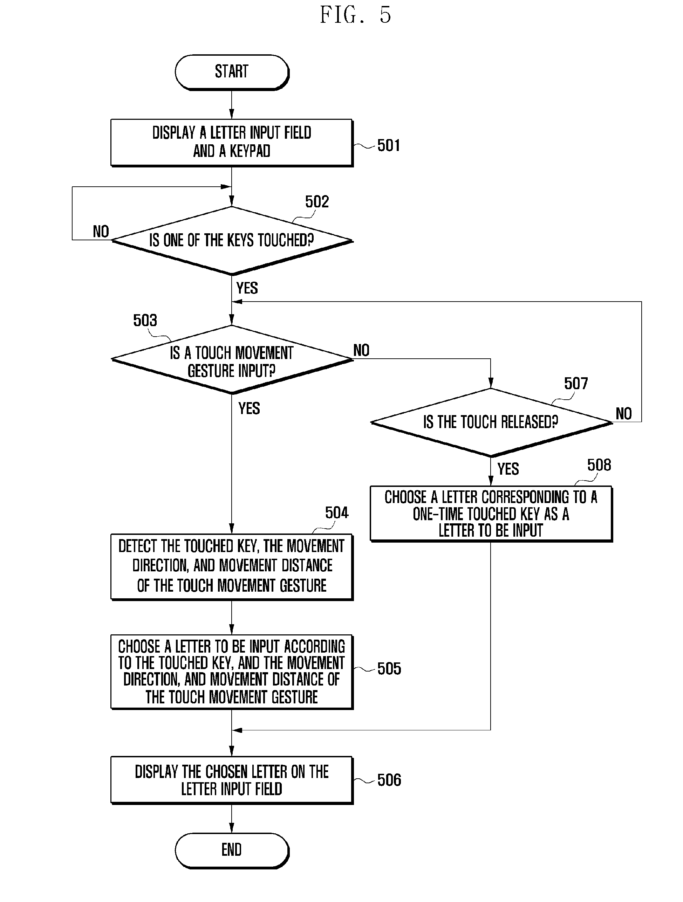

FIGURE 5 illustrates a process for inputting letters in a mobile device 100, according to another embodiment of the invention. According to an embodiment, letters to be input are chosen via a touched key, the movement direction, and movement distance of the touch movement gesture.

In block 501, the controller 160 controls the display unit 142 to display a virtual keypad with a number of keys and a letter input field. In an embodiment, the virtual keypad may be an English-letter virtual keypad or a Korean-letter ('Hangeul') virtual keypad. The virtual key pad may be implemented in substantially the same manner as previously described such that it has an edge region surrounding the keys. Alternatively, the virtual keypad may also be implemented as a general type of keypad that does not form an edge region.

Blocks 502 and 503 are substantially the same as blocks 202 and 203 of FIGURE 2, and have already been described in detail, with reference to the description of blocks 202 and 203.

When the controller 160 ascertains that the user does not perform the touch location movement gesture at block 503, it determines whether the touch is released (block 507). When the controller 160 ascertains that the touch has been released at block 507, it can choose a letter to be input, via a letter allocated to the key that was touched once (block 508). In block 506, the controller 160 controls the display unit 142 to display the chosen letter on the letter input field.

In contrast, when the controller 160 ascertains that the user moves the touch at block 503, it detects the touched key, the movement direction, and the movement distance of the touch location movement gesture (block 504). In another embodiment, the controller 160 may detect the number of boundaries between keys, based on the movement distance of the touch location movement gesture. For example, when a user touches an 'abc' key in the English-letter virtual keypad and performs the touch location movement gesture in the right direction to pass two keys, the controller 160 can detect that: the touched key is an 'abc' key; the movement direction of the touch location movement gesture is right; and the touch location movement gesture moves a distance corresponding to two keys.

After detecting the touched key, the movement direction and movement distance of the touch location movement gesture at block 504, the controller 160 chooses a letter to be input based on the touched key, the movement direction, and the movement distance of the touch movement gesture (block 505). In an embodiment, the storage unit 130 stores information regarding letters to be input, for each key in the virtual keypad, by matching movement directions and movement distances of the touch location movement gestures.

An embodiment is described where the virtual keypad is implemented with an English-letter virtual keypad. The English-letter virtual keypad has keys arranged in three columns where each key is allocated with three English letters.

First, when the controller 160 detects that a user touches one of the keys in the left column of the three columns and then releases the touch, it can choose, as a letter to be input, an English letter located at the left position of the three English letters arranged in order on the touched key. In addition, when the controller 160 detects that a user touches one of the keys in the left column and then moves the touch in the right direction to a key located next to the touched key, it can choose, as a letter to be input, an English letter located in the middle of the three English letters allocated to the touched key. Furthermore, when the controller 160 detects that a user touches one of the keys in the left column and then moves the touch in the right direction to a key located two keys from the touched key, it can choose, as a letter to be input, an English letter located at the right among the three English letters allocated to the touched key.

Second, when the controller 160 detects that a user touches one of the keys in the middle column of the three columns and then releases the touch, it can choose, as a letter to be input, an English letter located in the middle of the three English letters allocated to the touched key. In addition, when the controller 160 detects that a user touches one of the keys in the middle column and then moves the touch in the left direction to a key located next to the touched key, it can choose, as a letter to be input, an English letter located at the left among the three English letters allocated to the touched key. Furthermore, when the controller 160 detects that a user touches one of the keys in the middle column and then moves the touch in the right direction to a key located next to the touched key, it can choose, as a letter to be input, an English letter located at the right among the three English letters allocated to the touched key.

Third, when the controller 160 detects that a user touches one of the keys in the right column of the three columns and then releases the touch, it can choose, as a letter to be input, an English letter located at the right among the three English letters arranged in order on the touched key. In addition, when the controller 160 detects that a user touches one of the keys in the right column and then moves the touch in the left direction to a key located next to the touched key, it can choose, as a letter to be input, an English letter located in the middle of the three English letters allocated to the touched key. Furthermore, when the controller 160 detects that a user touches one of the keys in the right column and then moves the touch in the left direction to a key located two keys from the touched key, it can choose, as a letter to be input, an English letter located at the left among the three English letters allocated to the touched key.

For example, when a user touches the 'abc' key in the left column of the three columns and then releases the touch, the controller 160 chooses, as a letter to be input, the 'a' letter. In addition, when a user touches the 'abc' key and then moves the touch in the right direction to a key located next to the touched 'abc' key, the controller 160 chooses the 'b' letter as a letter to be input. Furthermore, when a user touches the 'abc' key and then moves the touch in the right direction to a key located two keys from the touched 'abc' key, the controller 160 chooses the 'c' letter as a letter to be input.

In another embodiment where the virtual keypad is implemented with a Korean-letter virtual keypad, when a user touches a 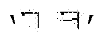 key and then moves the touch in the right direction to a key located next to the touched 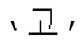 key, the controller 160 chooses the consonant 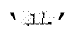 as a letter to be input.

After determining the letter to be input at block 505, the controller 160 controls the display unit 142 to display the chosen letter on the letter input field.

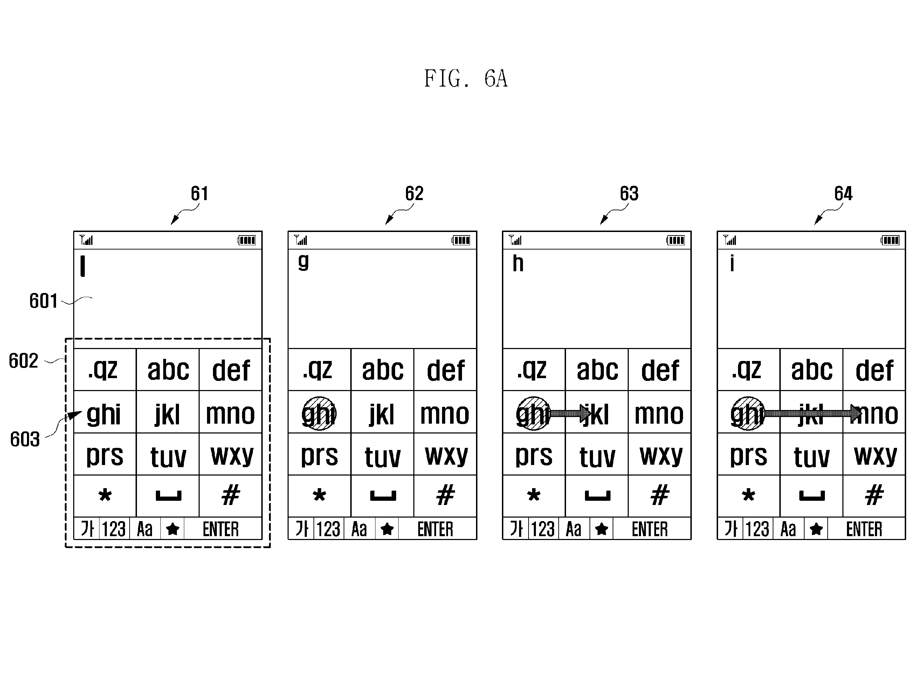

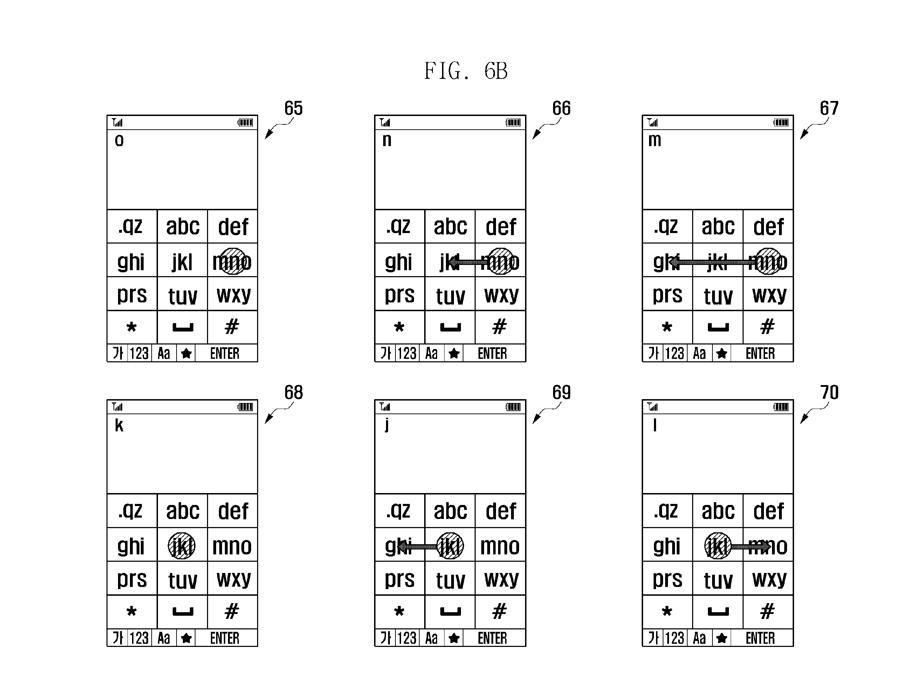

FIGURES 6A and 6B illustrate screens displayed on the mobile device 100 according to an embodiment of a method of the invention. The embodiment is described based on an English-letter virtual keypad.

Diagram 61 of FIGURE 6A shows a screen that is displayed when a letter input interface is executed. The screen displays a letter input field 601 and a virtual keypad 602. The virtual keypad 602 includes a number of keys 603 that are arranged in three columns.

Diagram 62 of FIGURE 6A shows a screen when a user touches one of the keys arranged in the left column of the three columns, for example, a 'ghi' key, and then releases the touch. In that situation, the 'g' letter located at the left among the letters 'ghi' allocated to the touched 'ghi' key is displayed on the letter input field 601.

Diagram 63 of FIGURE 6A shows a screen when a user touches the 'ghi' key, and then moves his/her touch in the right direction to a key located next to the touched 'ghi' key, i.e., the 'jkl' key. In that situation, the 'h' letter located in the middle among the letters 'ghi' allocated to the touched 'ghi' key is displayed on the letter input field 601.

Likewise, diagram 64 of FIGURE 6A shows a screen when a user touches the 'ghi' key, and then moves his/her touch in the right direction to a key located two keys from the touched 'ghi' key, i.e., the 'mno' key. In that situation, the 'i' letter located at the right among the letters 'ghi' allocated to the touched 'ghi' key is displayed on the letter input field 601.

Diagram 65 of FIGURE 6B shows a screen when a user touches one of the keys arranged in the right column of the three columns, for example, an 'mno' key, and then releases the touch. In that situation, the 'o' letter located at the right among the letters 'mno' allocated to the touched 'mno' key is displayed on the letter input field 601.

Diagram 66 of FIGURE 6B shows a screen when a user touches the 'mno' key, and then moves his/her touch in the left direction to a key located next to the touched 'mno' key, i.e., the 'jkl' key. In that situation, the 'n' letter located in the middle among the letters 'mno' allocated to the touched 'mno' key is displayed on the letter input field 601.

Likewise, diagram 67 of FIGURE 6B shows a screen when a user touches the 'mno' key, and then moves his/her touch in the left direction to a key located two keys from the touched 'mno' key, i.e., the 'ghi' key. In that situation, the 'm' letter located at the left among the letters 'mno' allocated to the touched 'mno' key is displayed on the letter input field 601.

Diagram 68 of FIGURE 6B shows a screen when a user touches one of the keys arranged in the middle column of the three columns, for example, a 'jkl' key, and then releases the touch. In that situation, the 'k' letter located in the middle among the letters 'jkl' allocated to the touched 'jkl' key is displayed on the letter input field 601.

Diagram 69 of FIGURE 6B shows a screen when a user touches the 'jkl' key, and then moves his/her touch in the left direction to a key located next to the touched 'jkl' key, i.e., the 'ghi' key. In that situation, the 'j' letter located in the left among the letters 'jkl' allocated to the touched 'jkl' key is displayed on the letter input field 601.

Likewise, diagram 70 of FIGURE 6B shows a screen when a user touches the 'jkl' key, and then moves his/her touch in the right direction to a key located next to the touched 'jkl' key, i.e., the 'mno' key. In that situation, the '1' letter located in the right among the letters 'jkl' allocated to the touched 'jkl' key is displayed on the letter input field 601.

Therefore, the letter input method according to an embodiment of the invention may allow users to input letters to the mobile device by altering the movement directions and movement distances of the touch location movement gesture.

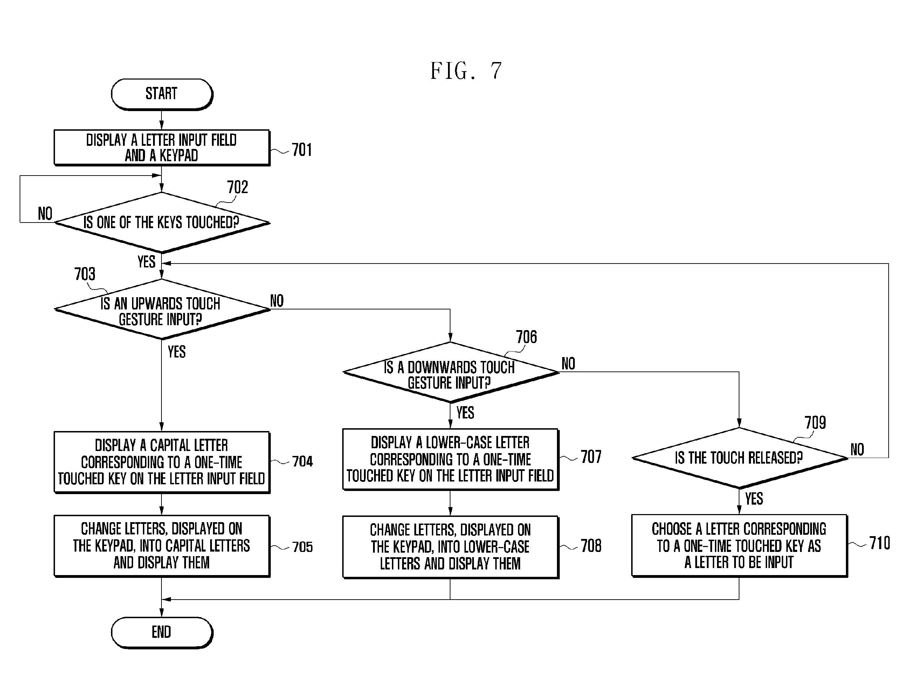

FIGURE 7 illustrates a process for inputting letters in a mobile device 100, according to another embodiment of the invention. This embodiment changes the form of letters that is being input or has already been input to the letter input field.

In block 701, the controller 160 controls the display unit 142 to display a virtual keypad with a number of keys and a letter input field. In an embodiment, the virtual keypad may be an English-letter virtual keypad. In that situation, the controller 160 may control the display unit 142 to display an English-letter virtual keypad with keys to which capital letters or lower-case letters are allocated. The virtual keypad may be implemented in such a manner that the keys are arranged in a 3x4 key layout or a QWERTY key layout according to an embodiment of the invention.

In block 702, the controller 160 controls the touch sensing unit 141 and determines whether the user touches one of a number of keys in the virtual keypad. In block 703, the controller 160 controls the touch sensing unit 141 and determines whether the user performs the touch location movement gesture in the upward direction.

When the controller 160 ascertains that the user performs the touch location movement gesture in the upward direction at block 703, it controls the display unit 142 to display a letter in the key that was touched once, in capital letter form, on the letter input field (block 704). For example, when a user touches an 'abc' key and then moves the touch in the upward direction, the controller 160 controls the display unit 142 to display the capital 'A' letter of an 'a' letter in the 'abc' key that was touched once on the letter input field. After displaying the capital letter of a letter in the one-time touched key at block 704, the controller 160 controls the display unit 142 to change the form of letters in the virtual keypad into the capital letters (block 705). That is, when the letters are displayed in lower-case letter form on the virtual keypad at block 701, the controller 160 controls the display unit 142 and changes the letters in the keys of the virtual keypad from lower-case letter form to capital letter form at block 705. In contrast, when the letters on the keys of the virtual keypad are displayed in capital letter form at block 701, the controller 160 controls the display unit 142 and retains the letters in capital letter form at block 705.

In contrast, when the controller 160 ascertains that the user does not perform the touch location movement gesture in the upward direction at block 703, it controls the touch sensing unit 141 and further determines whether the user performs the touch location movement gesture in the downward direction (block 706). When the controller 160 ascertains that the user performs the touch location movement gesture in the downward direction at block 706, it controls the display unit 142 to display a letter in the key that was touched once, in lower-case letter form, on the letter input field (block 707). In block 708, the controller 160 controls the display unit 142 to change the form of letters in the virtual keypad into the lower-case letters. That is, when the letters are displayed in lower-case letter form on the virtual keypad at block 701, the controller 160 controls the display unit 142 and retains the letters in lower-case letter form at block 708. In contrast, when the letters on the keys of the virtual keypad are displayed in capital letter form at block 701, the controller 160 controls the display unit 142 and changes the letters in the keys of the virtual keypad from capital letter form into lower-case letter form at block 708.

Meanwhile, when the controller 160 ascertains that the user does not perform the touch location movement gesture in the downward direction at block 706, it controls the touch sensing unit 141 and further determines whether the user releases the touch (block 709). When the controller 160 ascertains that the user releases the touch at block 709, it controls the display unit 142 to display a letter in the key that was touched once, on the letter input field (block 710). The controller 160 controls the display unit 142 to display the letter, in the form of letters currently displayed on the virtual keypad, on the letter input field. For example, when the virtual keypad is currently displaying letters in lower-case letter form, the controller 160 controls the display unit 142 to display a corresponding letter in lower-case letter form on the letter input field. Likewise, when the virtual keypad is currently displaying letters in capital letter form, the controller 160 controls the display unit 142 to display a corresponding letter in capital letter form on the letter input field. During this operation, the virtual keypad retains the form of letters.

In another embodiment, when the controller 160 ascertains that the user performs the touch location movement gesture in the upward direction at block 703, it can directly perform block 705 without conducting block 704. In another embodiment, when the controller 160 ascertains that the user performs the touch location movement gesture in the downward direction at block 706, it can directly perform block 708 without conducting block 707. In an embodiment, the controller 160 may only change the form of the letters on the virtual keypad and can display the changed form of letters thereon, without displaying letters on the letter input field.

Although an embodiment is described in such a manner that the virtual keypad changes the forms of letters according to the user's touch location movement gesture in the upward or downward direction, it should be understood that the invention is not limited to this embodiment. For example, it may also be applied to the user's touch location movement gesture in the right or left direction.

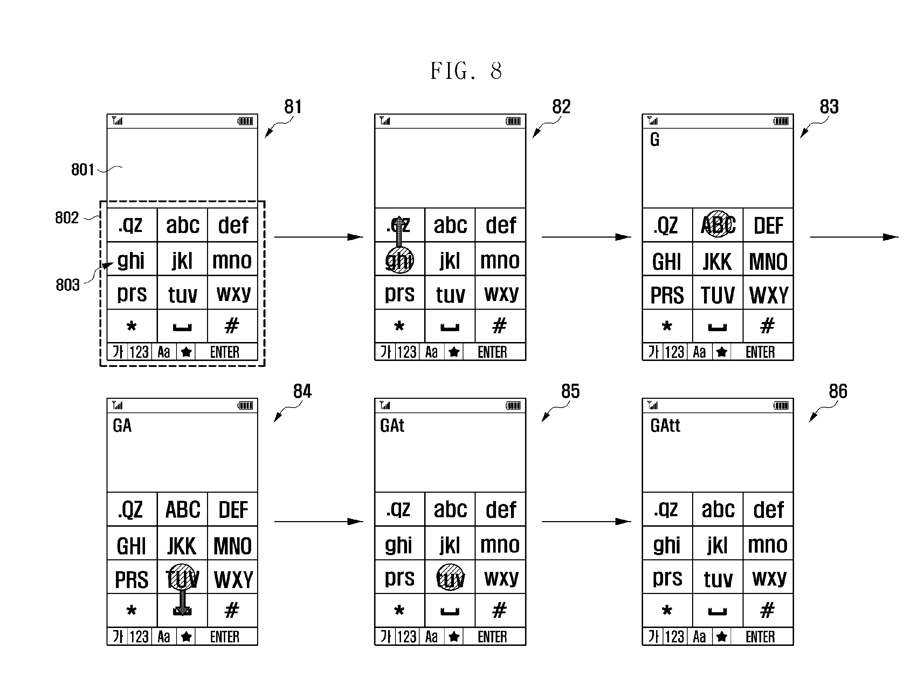

FIGURE 8 illustrates an example of screens displayed on the mobile device 100 according to another embodiment of the invention. The embodiment is described based on an English-letter virtual keypad.

Diagram 81 of FIGURE 8 shows a screen that is displayed when a letter input interface is executed. The screen displays a letter input field 801 and a virtual keypad 802. The virtual keypad 802 includes a number of keys 803 displayed in lower-case letter form.

Diagram 82 of FIGURE 8 shows a screen that describes a process where a user touches one of the keys, for example, a 'ghi' key, and then moves his/her touch in the upward direction.

Diagram 83 of FIGURE 8 shows a screen resulting from the process described in diagram 82 of FIGURE 8. That is, the process displays the 'G' letter on the letter input field 801 and also displays the letters in the keys 803 of the virtual keypad 802, in capital letter form.

Diagram 84 of FIGURE 8 shows a screen resulting from a process where the user touches an 'ABC' key in the virtual keypad 802 and releases the touch, on the screen shown in diagram 83 of FIGURE 8. That is, as shown in diagram 84, the process displays the 'G' letter and an 'A' letter immediately following the 'G' letter on the letter input field 801 and retains the form of letters in the virtual keypad 802, i.e., in capital letter form.

Diagram 85 of FIGURE 8 shows a screen resulting from a process where the user touches a 'TUV' key in the virtual keypad 802 and moves the touch in the downward direction, on the screen as shown in diagram 84 of FIGURE 8. That is, as shown in diagram 85, the process displays the 'GA' letters and a 't' letter immediately following the 'GA' letters on the letter input field 801 and also displays the letters in the keys 803 of the virtual keypad 802, in lower-case letter form.

Diagram 86 of FIGURE 8 shows a screen resulting from a process where the user touches a 'tuv' key in the virtual keypad 802, and releases the touch, on the screen shown in diagram 85 of FIGURE 8. That is, as shown in diagram 86, the process displays the 'GAt' letters and a 't' letter immediately following the 'GAt' letters on the letter input field 801 and retains the form of letters in the virtual keypad 802, i.e., in lower-case letter form.

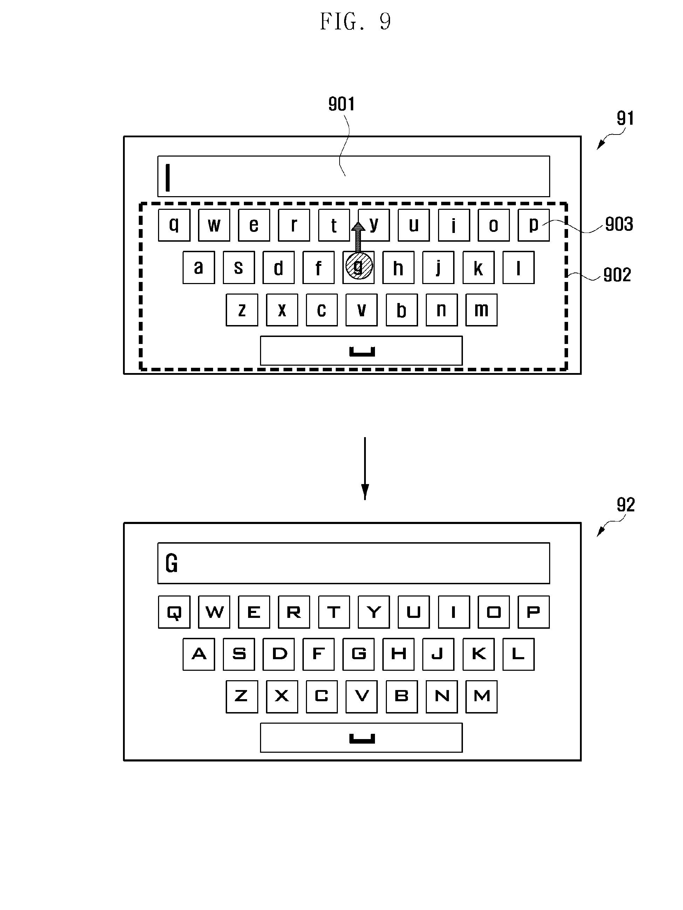

FIGURE 9 illustrates another example of screens displayed on the mobile device 100 according to an embodiment of the invention. The embodiment is described based on an English-letter virtual keypad with a QWERTY key layout.

Diagram 91 of FIGURE 9 shows a screen that displays a letter input field 901 and a virtual keypad 902. The virtual keypad 902 includes a number of keys 903 to which corresponding English letters are allocated respectively. The keys 803 are displayed in lower-case letter form.

Diagram 92 of FIGURE 9 shows a screen resulting from the process where a user touches one of the keys, for example, a 'g' key, on the virtual keypad 902 and then moves his/her touch in the upward direction, on the screen shown in diagram 91. That is, as shown in diagram 92, the process displays the 'G' letter on the letter input field 901 and also displays the letters in the keys 903 of the virtual keypad 902, in capital letter form.

Therefore, the letter input method according to an embodiment of the invention can allow users to set the environment for inputting letters via the virtual keypad, by controlling the movement direction of the touch location movement gesture.

As described above, the letter input system of the invention can allow a user to sufficiently utilize the advantage of touch screens by conducting the touch location movement gesture, such as a drag, such that they can easily input letters to the mobile devices via the touch screens. For example, users can conveniently input letters to the mobile device, via the touch screen, by varying the movement direction or movement distance of the touch location movement gesture. Therefore, the letter input system may reduce the number of key touches and increase the letter input speed when the users type on the mobile device.

In addition, the letter input system of the invention can easily change letters in the keys of the virtual keypad, for English letters, from capital letter form to lower-case letter form, or vice versa, as users touch a letter key and then perform the touch location movement gesture. This can remove the special function key for changing between capital letter form and lower-case letter form from conventional keypads and can also increase the letter input speed.

As described above, the letter input method according to the invention can allow users to rapidly and easily type letters to the touch screen of a mobile device, compared with conventional letter input methods.

Although the present disclosure has been described with an exemplary embodiment, various changes and modifications may be suggested to one skilled in the art. It is intended that the present disclosure encompass such changes and modifications as fall within the scope of the appended claims.

## Claims

1. A letter input method of a mobile device comprising:
displaying a letter input field and a virtual keypad comprising a number of keys;
sensing a user's touch applied to one of the number of keys and touch location movement;
determining the touched key and a movement direction of a touch location movement gesture;
choosing a letter to be input, according to the touched key and the movement direction; and
displaying the chosen letter on the letter input field.

2. The letter input method of claim 1, wherein displaying the virtual keypad further comprises:
displaying an edge region surrounding the virtual keypad.

3. The letter input method of claim 1, wherein determining the touched key and the movement direction comprises:
determining whether the touch location movement gesture moves from the a region of the touched key to a region of another key.

4. The letter input method of claim 3, wherein choosing a letter to be input is performed when the touch location movement gesture moves from the region of the touched key to the region of another key.

5. The letter input method of claim 1, wherein determining the touched key and the movement direction comprises:
determining whether the touch location movement gesture exceeds a preset value.

6. The letter input method of claim 5, wherein choosing a letter to be input is performed when the touch location movement gesture exceeds the preset value.

7. The letter input method of claim 1, wherein sensing touch on one of the number of keys and touch location movement comprises:
detecting a touch on one of the number of keys;
detecting a release of the touch from the touched key;
detecting a touch of another key; and
detecting a touch location movement gesture from the other touched key.

8. The letter input method of claim 7, wherein choosing a letter to be input comprises:
choosing a letter to be input, according to the key from which the touch is released, the key to which another touch is applied and from which the touch location movement gesture is performed, and the movement direction of the touch location movement gesture.

9. The letter input method of claim 1, wherein determiming the touched key and the movement direction further comprises:
detecting a movement distance of the touch location movement gesture.

10. The letter input method of claim 9, wherein choosing a letter to be input comprises:
choosing a letter to be input, according to the touched key, the movement direction, and the movement distance.

11. The letter input method of claim 1, further comprising:
changing a form of letters displayed on the virtual keypad, according to the touched key and the movement direction.

12. The letter input method of claim 11, wherein:
the virtual keypad is an English-letter virtual keypad; and
changing the form of the letters on the virtual keypad comprises:
changing the letters on the virtual keypad from one of lower-case letter form to capital letter form and from capital letter form to lower-case letter form according to whether the letters on the virtual keypad are displayed in capital letter form.

13. The letter input method of claim 1, wherein:
the virtual keypad is a Korean-letter virtual keypad;
choosing a letter to be input comprises:
choosing at least one consonant according to the touched key and a number of key touches, and a vowel according to a movement direction of the touch location movement gesture,
combining the chosen consonant and the chosen vowel, and
choosing a syllable to be input, based on a combination of the chosen consonant and the chosen vowel.

14. A mobile device comprising:
a touch sensing unit configured to sense a user's touch and a user's touch location movement gesture;
a display unit configured to display a letter input field and a virtual keypad comprising a number of keys; and
a controller configured to control the touch sensing unit, sense the user's touch applied to one of the keys and the user's touch location movement, determine a touched key and a movement direction of the touch location movement gesture, choose a letter to be input according to the touched key and the movement direction, and control the display unit to display the chosen letter on the letter input field.

15. The mobile device of claim 14, wherein the controller is further configured to control the display unit to display an edge region surrounding the virtual keypad.
